# EUROPEAN PATENT APPLICATION

(11) **EP 4 397 619 A1**
(43) Date of publication of application: **10.07.2024**
(21) Application number: 23150362.4
(22) Date of filing: 04.01.2023
(51) Int. Cl.: C01B 17/90, B01D 17/00, H01L 21/00

(54) **DECOMPOSITION OF HYDROGEN PEROXIDE IN SULFURIC ACID**

(71) Applicant: Tower Semiconductor Ltd., 2310502 Migdal HaEmek (IL)
(72) Inventor: Lurie, Michael, 4265936 Netanya (IL); Shtal, Milan, Yokneam (IL); Vardi, Shai, 3009500 Ramat Yshai (IL)
(74) Representative: Cipriani, Guido

(57) **Abstract**

A method of decomposition of hydrogen peroxide in sulfuric acid, the method includes decomposing hydrogen peroxide in sulfuric acid by a bed of activated carbon that belongs to a filter, while controlling a level of the sulfuric acid within the filter not to exceed a height threshold.

## Description

### BACKGROUND OF THE INVENTION

It has been found that solutions for removal of hydrogen peroxide from sulfuric acid using carbonaceous materials: dosing of activated carbon into decomposition tank and further separation of activated carbon and utilization coke at elevated temperatures are complicate and expensive.

There is a growing need to provide an effective method for the decomposition of hydrogen peroxide in sulfuric acid.

### SUMMARY

There is provided a method of decomposition of hydrogen peroxide in sulfuric acid, the method includes decomposing hydrogen peroxide in sulfuric acid by a bed of activated carbon that belongs to a filter, while controlling a level of the sulfuric acid within the filter not to exceed a height threshold.

There is provided a system for decomposition of hydrogen peroxide in sulfuric acid, the system include a filter that includes a bed of activated carbon, wherein the bed is configured to the decompose hydrogen peroxide in the sulfuric acid, while controlling a level of the sulfuric acid within the filter not to exceed a height threshold.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1A is a schematic illustration of a system;
FIG. 1B is a schematic illustration of a system;
FIG. 2 is a schematic illustration of a system;
FIG. 3 is a schematic illustration of a method; and
FIG. 4 is a schematic illustration of a system.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DESCRIPTION OF THE PREFERRED EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

Because the illustrated embodiments of the present invention may for the most part, be implemented using different components and circuits known to those skilled in the art, details will not be explained in any greater extent than that considered necessary as illustrated above, for the understanding and appreciation of the underlying concepts of the present invention and in order not to obfuscate or distract from the teachings of the present invention.

The term "and/or" means additionally or alternatively. For example - A and/or B - may mean only A, only B, or both A and B.

Any reference to a method should be applied mutatis mutandis to a system configured to execute the method.

Any reference to a system should be applied mutatis mutandis to a method executable by the system.

It has been found that a bed of activated carbon (also referred as bed) can be successfully applied - thereby reducing the cost of the hydrogen peroxide decomposition process - by controlling the level of acid containing hydrogen peroxide within a filter that includes the bed - in a manner that prevents this acid from forming a significant barrier for a release of oxygen emitted during the decomposition of hydrogen peroxide. The control of the level of the acid containing hydrogen peroxide within the filter prevents the accumulation of oxygen in the bed and the interference of the oxygen with the decomposition of hydrogen peroxide.

The trapping of an oxygen in the bed and its interference with decomposition of hydrogen peroxide at concentration of the latter in treated liquid above 1 to 2mg/L was reported.

The tested sulfuric acid from manufacturing semiconductors contained 0.00675wt% (600750,000ppm) of hydrogen peroxide; typical values were in the range 2÷3.5wt% of hydrogen peroxide.

In contact with activated carbon hydrogen peroxide decomposes to water and oxygen gas: 2H₂O₂ is transformed to 2H₂O + O₂. Each liter of 45wt% sulfuric acid, containing 5wt% of hydrogen peroxide, releases about 30 liters of oxygen.

Decomposition of hydrogen peroxide is exothermic reaction. Experiments with the clear filters, filled with activated carbon, showed visually that the decomposition of hydrogen peroxide in sulfuric acid is very rapid, and most amount of the oxygen is formed in the upper layer - about 50 to 100mm of activated carbon. This conclusion was supported by the fact that only the upper layer of 50 to 100mm of activated carbon increased its temperature during some minutes, while the lower layers of the bed remained at room temperature for a long time.

Sulfuric acid above the bed prevented the free release of oxygen to the atmosphere/exhaust system. When the height of this liquid layer exceeded 50mm, a significant part of the oxygen was trapped in the bed and limited the passage of the acid through the filter or/and leaded to a flipping of the bed followed by the release of the processed sulfuric acid with high concentrations of hydrogen peroxide and fines of activated carbon.

An uninterrupted process of decomposition of hydrogen peroxide was possible if the level of sulfuric acid in the filter did not exceed 50mm above the bed.

Improved results were obtained when the level of sulfuric acid in the filter was 50 to 100mm below the top of the bed, and sulfuric acid was distributed above the activated carbon not covered with liquid. These conditions were the best for the release of oxygen to the atmosphere/exhaust system, and further removal of residual hydrogen peroxide by activated carbon below the level of sulfuric acid was stable and efficient.

At a concentration of hydrogen peroxide greater than 5%, the decomposition reaction became violent and aggressive with a high release of heat.

Over time, activated carbon was destroyed, and the content of fine particles increased. This reduced the throughput of the bed, and it had to be replaced. Long-term experiments showed that the service life of the applied activated carbon was about six months. This lifetime may depend on concentration of hydrogen peroxide, process conditions and type of activated carbon.

Our experiments demonstrated the need for a different level of sulfuric acid in the filter during the decomposition of hydrogen peroxide and during idle periods - pauses in operation.

During the treatment process sulfuric acid did not cover the upper layer of 50 to 100mm of the bed. If this upper layer remained exposed to an atmosphere during pauses in operation, due to an unknown reason it lost its catalytic activity in the decomposition of hydrogen peroxide. Then the process of decomposition of hydrogen peroxide started after its contact with the activated carbon of the bed below the mentioned upper layer of the bed. The mentioned upper layer of the bed remained cold, while the lower layers increased their temperature after a contact with sulfuric acid containing hydrogen peroxide.

This negative phenomenon was overcome by filling the filter with sulfuric acid to cover the bed prior to the pause in operation.

Application of S-bend pipe at the outlet of the filter significantly decreased residual concentration of hydrogen peroxide in processed acid. We assume that the S-bend pipe enhances the filling of the pores of the bed with the acid, increasing the actual surface area of the activated carbon involved in the process of decomposition of hydrogen peroxide, and prevents the channeling in the bed.

The utilization of the S-bend pipe enables maintaining the desired level of sulfuric acid below the top of the bed within the filter, and maximizes the decomposition of hydrogen peroxide by activated carbon. Furter examples will demonstrate effect of the S-bend pipe on decomposition of hydrogen peroxide.

The inner diameter of the flexible S-bend pipe was significantly oversized to avoid negative pressure at its outlet and to prevent suction of the acid from the filter.

Decomposition of hydrogen peroxide is exothermic reaction. The flow of sulfuric acid and concentration of hydrogen peroxide in it define the temperature of activated carbon, especially in its upper layer.

Maximum allowable temperature in the filter is limited by materials of construction of the filter and adjacent piping.

The temperature of the upper layer of activated carbon might suddenly increase due to unexpected high concentration of hydrogen peroxide in sulfuric acid or/and high acid flow.

For safety reasons the temperature of the upper layer of activated carbon in the filter should be continuously monitored, and supply of sulfuric acid to the said filter should be stopped immediately when this temperature exceeds predefined value.

Linear flow velocity of sulfuric acid in this application defines primarily heat release (the temperature) in the filter, and release of the fines of activated carbon with the processed acid. The optimal linear flow velocity should be defined experimentally in each case for the certain concentration of hydrogen peroxide in sulfuric acid and the type of applied activated carbon. This flow velocity should provide desired temperature of activated carbon, and prevent breakthrough of fines in processed acid.

Optimal contact time of sulfuric acid with activated carbon may be defined experimentally at optimal linear flow velocity based on desired residual concentration of hydrogen peroxide in the processed acid.

Actually, proposed process is limited by the feed concentration of hydrogen peroxide 5wt% in sulfuric acid, and enables achieving extremely low concentrations of hydrogen peroxide that cannot be defined with potassium permanganate.

The needed linear flow velocity of sulfuric acid in this application is low enough, and does not require the use of elevated pressure; gravitation is just sufficient in this case.

The application of pressurized filters is not justified economically as well.

There are safety risks associated with using pressurized filters in this application due to high volumes of released oxygen.

Atmospheric pressure is optimal in this application due to technological, economic, and safety reasons.

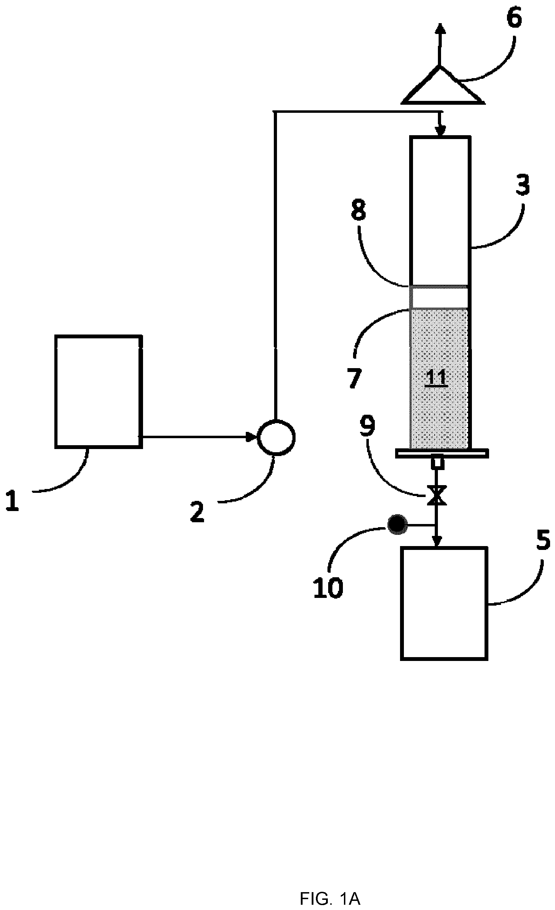

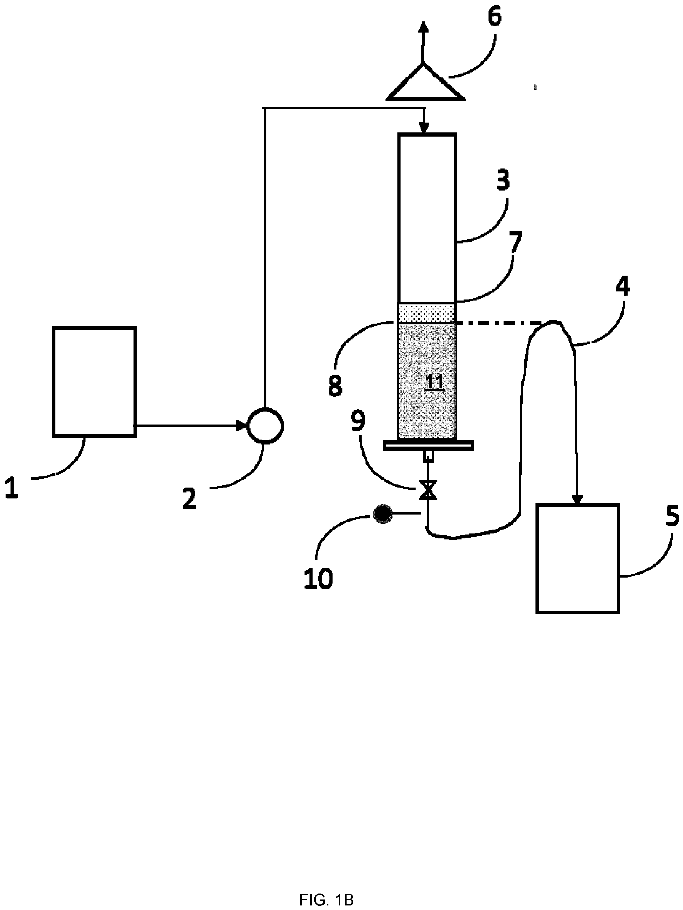

Figures 1A and 1B illustrate an example of a system that includes a filter with a bed.

Figure 1A is a schematic illustration of the filter without S-bend pipe, and figure 1B - with S-bend pipe. The drawings are not drawn to scale. In all drawings, each identical component is represented by the same number.

Sulfuric acid from semiconductor fabrication was supplied from the tank **1** by the pump **2** overhead the filter **3** and allowed to flow down through the bed **11** to the collection tank of the purified sulfuric acid **5.** Released oxygen and vapors of sulfuric acid were vented to exhaust system through the funnel **6.** The filter **3** was made from clear PVC (inner diameter 141.8mm; depth 1500mm) and filled with sulfuric acid to a predefined level **8.**

In figure 1A, the level of sulfuric acid in the filter **3** was controlled by manual valve **9,** and the level of sulfuric acid was slightly (about 50mm) below the top **7** of the bed **11.** When S-bend pipe **4** was applied (FIG. 1B), the valve **9** was open, and the height of the S-bend pipe **4** controlled the level of sulfuric acid in the filter **3.** In figure 1B the level 8 of the sulfuric acid was slightly below (between 50 and 100 mm below) the top **7** of the bed **11.**

The samples of purified sulfuric acid for analyses were retrieved at sample point **10** and at collection tank **5.**

Hydrogen peroxide concentration was measured by direct titration with potassium permanganate.

The activated carbon utilized was Hydraffin CC 12x40 - an acid washed granular activated carbon based on coconut shell from DONAU CARBON.

Maximal allowed linear flow velocity of the acid containing ≤4.5wt% of hydrogen peroxide was defined ≤1m/hour to keep the temperature in the filter below 60°C.

### First example

The sulfuric acid contained 42wt% H₂SO₄ and 2.33wt% H₂O₂.

The level of sulfuric acid in the filter was controlled by the height of the flexible S-bend pipe.

TABLE 1 illustrates the effect of the Level of Sulfuric Acid on the Process of Decomposition of Hydrogen Peroxide. The depth of the bed of activated carbon was 850 mm, a S-bend was used, the flow of H₂SO₄ was 15.6 L/hour, the linear flow velocity was about 1 meter/hour, the contact time was 0.9 hour.

**TABLE 1**

| Level of H₂SO₄ - in relation to the top of the bed | Concentration of H₂O₂ in the processed acid (wt%) | Comments |
|---|---|---|
| 200mm above | 0.0310 | Flipping of the layer of activated carbon. Breakthrough of particles and H₂O₂ in the effluent. The processed acid is black |
| 50mm above | 0.0065 | The processed acid is clear. |
| 50-100 mm below | <0.0001 | The processed acid is clear. |

The data show that the level of acid in the filter is an essential factor in the process of decomposition of hydrogen peroxide in sulfuric acid.

When the level of sulfuric acid exceeded 50mm above the top of the bed, the process of decomposition of hydrogen peroxide became unstable. An oxygen accumulated in the bed of activated carbon. Sometimes the trapped oxygen limited the throughput of the filter. It resulted in overflow of the acid from the filter. Sometimes this oxygen caused a flipping of the layers in the bed. It resulted in a breakthrough of hydrogen peroxide and fines of activated carbon in the processed acid. The latter was colored black in these cases.

The process of decomposition of hydrogen peroxide became stable when the level of acid above the top of the bed did not exceed 50mm.

The lowering of the level of the acid down to 100mm below the top of the bed resulted in significant decreasing of residual concentration of hydrogen peroxide in the processed acid. Actually, residual hydrogen peroxide could not be defined with potassium permanganate.

### Second example.

The sulfuric acid contained 55.1wt% H₂SO₄ and 4.5wt% H₂O₂.

In the absence of S-bend pipe **4** (figure 1A) the level of sulfuric acid in the filter **3** was controlled by the manual valve **9.** When S-bend pipe **4** was applied (figure 1B), the valve **9** was open, and the same level of sulfuric acid in the filter was controlled by the height of the S-bend **4.**

TABLE 2 illustrates an effect of the S-bend pipe on Performance of Activated Carbon.

The depth of the bed was 850 mm, the level of the H₂SO₄ was fifty millimeter above the level of the activate carbon, the flow of H₂SO₄ was 15.6 L/hour, the linear flow velocity was about 1 meter/hour, the contact time was 0.9 hour.

**TABLE 2**

| S-bend use | Concentration of H₂0₂ in the processed acid (wt%) |
|---|---|
| No | 0.0078 |
| Yes | 0.0013 |

The data show that an application of the S-bend pipe resulted in 6-fold decrease of residual concentration of hydrogen peroxide in the processed sulfuric acid.

We assume that the S-bend pipe enhanced the filling of the pores of activated carbon with the acid, and increased the actual surface area of the activated carbon involved in the process of decomposition of hydrogen peroxide. Probably, the S-bend prevented the channeling effect as well.

### Third example

The sulfuric acid contained 45.5wt% H₂SO₄ and 2.14wt% H₂O₂.

Flow velocity of sulfuric acid was the same in all tests of this example.

Contact time was defined by the depth of the bed in the filter.

TABLE 3 illustrates an effect of the Contact Time on Residual Concentration of Hydrogen Peroxide.

The level of H₂SO₄ was 50-100 millimeters below the top of the bed, S-bend pipe was used, the flow of H₂SO₄ was 14 L/hr, the linear flow velocity was about 0.9 meter/hour, the contact time was 0.9 hour.

**TABLE 3**

| Depth of the bed (mm) | Contact time (hours) | Concentration of H₂O₂ in the processed acid (wt%) |
|---|---|---|
| 500 | 0.66 | 0.0348 |
| 650 | 0.73 | 0.0111 |
| 850 | 0.96 | <0.0001 |

The data show that the optimal contact time can be chosen according to required residual concentration of hydrogen peroxide in the processed sulfuric acid.

Contact time of about 1 hour in the test conditions was sufficient for decreasing the residual concentration of hydrogen peroxide below 0.0001wt% (<1ppm).

### Fourth example

The breakthrough of hydrogen peroxide from the filter of activated carbon can occur in some cases, for example at an unexpected high concentration of hydrogen peroxide in sulfuric acid.

The objective of this example was to simulate situation when the processed acid from the lead filter contains relatively high concentration of hydrogen peroxide, and this acid is treated by the lag filter of activated carbon.

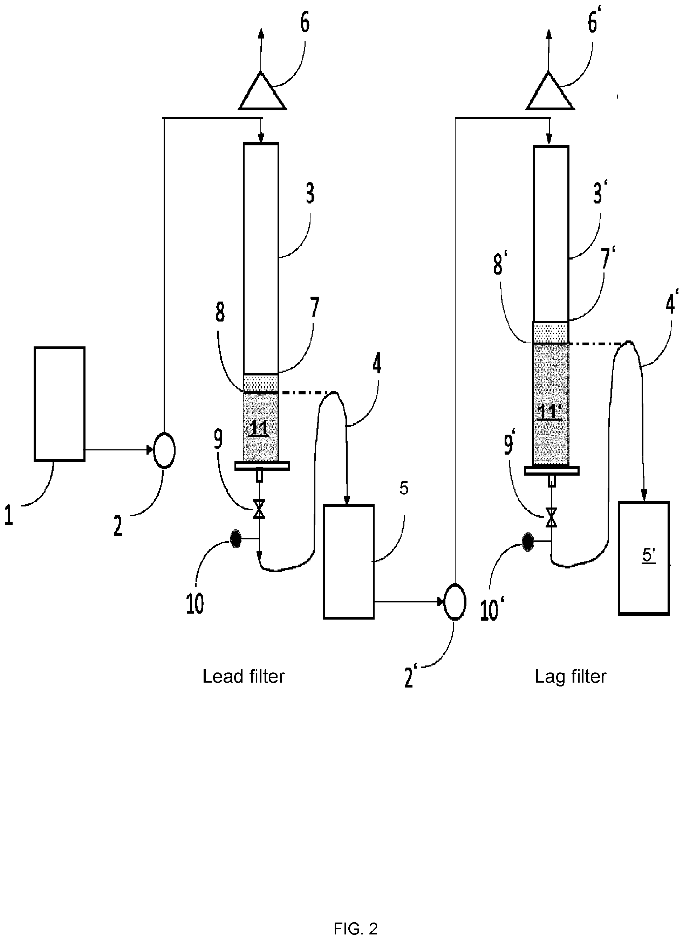

Figure 2 illustrates operation of a lead filter **3** and a lag filter **3'** of activated carbon in lead-lag configuration. The depth of the bed in the lead filter was 650mm only to get an elevated concentration of hydrogen peroxide at its outlet. The depth of the bed in the lag filter **3'** was 850mm.

The product of the lead filter **3** was fed to the lag filter **3'.**

Sulfuric acid from semiconductor fabrication was supplied from the tank **1** by the pump **2** overhead the lead filter **3** and allowed to flow down through the bed **11** to a sampling point **10** and to a first collection tank **5.** Released oxygen and vapors of sulfuric acid from lead filter **3** were vented to exhaust system through the funnel **6.** The lead filter **3** was filled with sulfuric acid to a level **8** slightly below (between 50 and 100 mm below) the top **7** of the bed **11.** The level of sulfuric acid in the lead filter **3** was controlled by S-bend pipe **4** (valve **9** was open).

First processed sulfuric acid from first collection tank **5** was provided to lag filter **3'** and allowed to flow down through the bed activated carbon **11'** to a second sampling point **10'** and to a second collection tank **5'.** Released oxygen and vapors of sulfuric acid from lag filter **3'** were vented to exhaust system through the second funnel **6'.** The lag filter **3'** was filled with sulfuric acid to a level **8** slightly below (between 50 and 100 mm below) the top **7'** of the second bed **11'.** The level of sulfuric acid in the lag filter **3'** was controlled by second S-bend pipe **4'** (valve **9'** was open).

The sulfuric acid feeding the lead filter contained 52.5wt% H₂SO₄ and 3.57wt% H₂O₂.

TABLE 4 illustrates an operation of the Filters of Activated Carbon in Lead-Lag Configuration.

The level of H₂SO₄ was 50-100 millimeters below the top of the bed of activated carbon, S-bend pipe was used, the flow of H₂SO₄ was 14.5 L/hour, the linear flow velocity was about 0.9 meter/hour.

**TABLE 4**

| | Depth of the bed (mm) | Contact time (hours) | Concentration of H₂O₂ in the processed acid (wt%) |
|---|---|---|---|
| H₂SO₄ after the lead filter | 650 | 0.7 | 0.0125 |
| H₂SO₄ after the lag filter | 850 | 0.9 | <0.0001 |

The data show that when two filters of activated carbon were used in series, the lag filter successfully treated the elevated concentration of hydrogen peroxide from the lead filter.

### Fifth example

### Long-run Operation of the Pilot Filters of Activated Carbon.

Two systems, schematically illustrated in figure 1B, comprised the filters 3, containing about 13.4Liters of activated carbon each. The depth of the beds of granulated activated carbon in the filters was about 850mm, and the level of sulfuric acid was about 50-100mm below the top of the bed. These systems worked in parallel. Each system treated the sulfuric acid from semiconductor fabrication at the flow of about 12L/hour. Concentration of sulfuric acid varied in the range 39.9 - 42.4wt%, concentration of hydrogen peroxide varied in the range of 2.3 - 3.9wt%, residual concentration of hydrogen peroxide in processed sulfuric acid was below 0.001wt%.

The systems were operated 24/7 for about 6 months. Each filter successfully treated about 3,850 bed volumes of sulfuric acid. Then the throughput of the filters decreased due to the fines of activated carbon accumulated in the bed, and activated carbon was replaced.

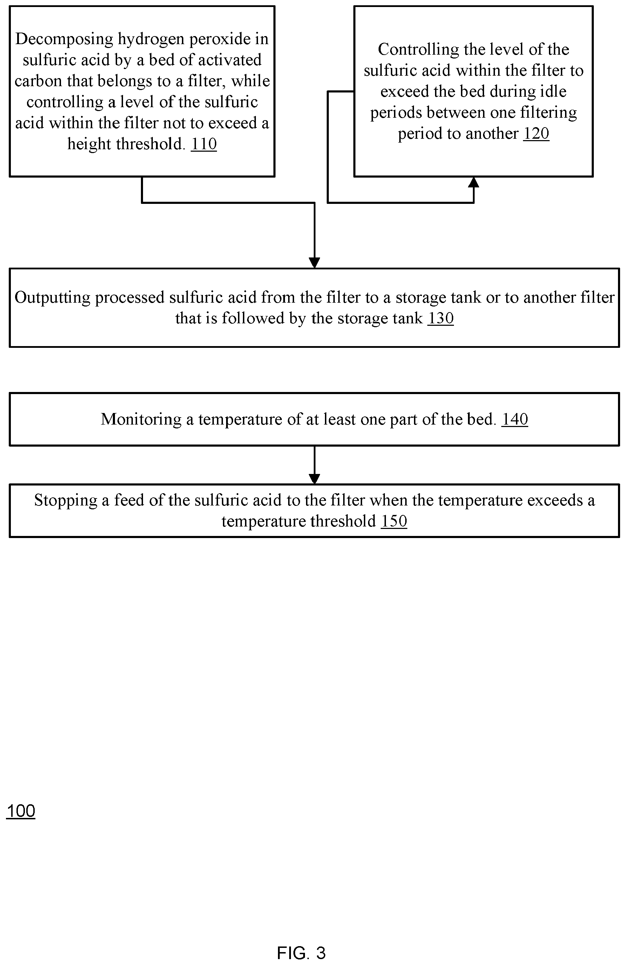

Figure 3 illustrates an example of method 100 of decomposition of hydrogen peroxide in sulfuric acid.

Method 100 includes step 110 of decomposing hydrogen peroxide in sulfuric acid by a bed of activated carbon that belongs to a filter, while controlling a level of the sulfuric acid within the filter not to exceed a height threshold.

The height threshold of sulfuric acid in the filter should allow free release of oxygen to atmosphere/exhaust, may prevent the trapping of oxygen in the bed and enable stable and efficient decomposing of hydrogen peroxide. The height threshold of sulfuric acid in the filter may be selected out of (a) a height threshold that does not exceed fifty millimeters above the top of the bed : (b) a height threshold that does exceed a top of the bed, (c) a height threshold that is below a top of the bed, (d) a height threshold that is fifty to hundred millimeters below a the top of the bed, (d) a height threshold that is below a top of the bed and is equal to the depth of the maximum heating of activated carbon in the test filter under experimental conditions when the entire bed is covered with sulfuric acid containing hydrogen peroxide.

Step 110 may include controlling the level of the sulfuric acid within the filter by using an S-bend pipe.

Step 110 may include controlling the level of the sulfuric acid within the filter by using an S-bend pipe and/or valve at the outlet of the said filter and preventing a formation of negative pressure at an outlet of the said S-bend pipe.

Step 110 may include decomposing hydrogen peroxide in sulfuric acid by the fix bed filter while maintaining an atmospheric pressure within the filter.

Method 100 may include step 120 of monitoring a temperature of at least the upper layer (50÷100mm) of the bed, and may include step 140 of stopping the decomposing of the hydrogen peroxide when the temperature exceeds a temperature threshold.

Step 110 may be followed by step 130 of outputting the processed sulfuric acid from the filter to a storage tank or to one or more other filters, followed by the storage tank.

Step 130 may include mechanical filtration of processed sulfuric acid prior to its storage.

Method 100 may include step 150 of increasing the level of the sulfuric acid within the filter to cover an activated carbon with sulfuric acid during idle periods between one filtering period to another.

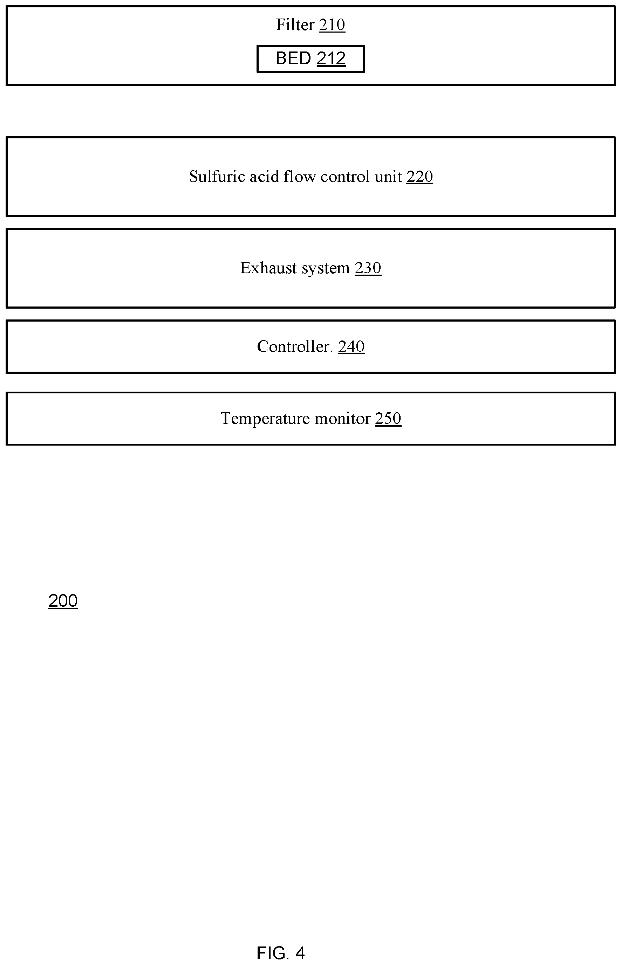

Figure 4 illustrates an example of a system 200 for decomposition of hydrogen peroxide in sulfuric acid, the system includes (a) a decomposition unit 210, (b) sulfuric acid flow control unit 220, (c) exhaust system 230, and (d) controller 240 for controlling the system. Figure 4 also illustrates system 200 as including temperature monitor 250.

The decomposition unit 210 includes at least one fix bed filter 212.

The decomposition unit 210 may be configured to output the processed sulfuric acid from filter 212 to a storage tank or to another filter unit.

The construction of filter 212 may be configured to maintain an atmospheric pressure within the filter during the decomposition process.

The sulfuric acid flow control unit 220 is configured to control a load of the sulfuric acid within the decomposition unit and levels of sulfuric acid in the storage tank(s).

The sulfuric acid flow control unit 220 may control the level of the sulfuric acid within the filter(s) by using an S-bend pipe and/or by using a valve at the outlet of filter(s). The S-bend pipe may be shaped and sized to prevent a formation of negative pressure at an its outlet.

The height threshold of sulfuric acid in the filter should prevent the trapping of oxygen in the bed and enable stable and efficient decomposing of hydrogen peroxide. The height threshold of sulfuric acid in the filter may be selected out of (a) a height threshold that does not exceed fifty millimeters above the top of the bed : (b) a height threshold that does exceed a top of the bed, (c) a height threshold that is below a top of the bed, (d) a height threshold that is fifty to hundred millimeters below a the top of the bed, (d) a height threshold that is below a top of the bed and is equal to the depth of the maximum heating of activated carbon in the test filter under experimental conditions when the entire bed is covered with sulfuric acid containing hydrogen peroxide.

The exhaust system 230 is configured to vent oxygen and vapors of sulfuric acid released from the decomposition unit.

The temperature monitor 250 may be configured to monitor a temperature of at least one part (top layer) of the bed . The controller 240, when fed with an indication that temperature in the bed exceeds a temperature threshold, may be configured to stop the feed of sulfuric acid to the the filter.

Any reference to any of the terms "comprise", "comprises", "comprising" "including", "may include" and "includes" may be applied, mutatis mutandis, to any of the terms "consists", "consisting", "consisting essentially of'.

In the foregoing specification, the invention has been described with reference to specific examples of embodiments of the invention. It will, however, be evident that various modifications and changes may be made.

Moreover, the terms "front, " "back, " "top, " "bottom, " "over, " "under " and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one " and "one or more " in the claims should not be construed to imply that the introduction of another claim element by the indefinite articles "a " or "an " limits any particular claim containing such introduced claim element to inventions containing only one such element, even when the same claim includes the introductory phrases "one or more " or "at least one " and indefinite articles such as "a " or "an. " The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A method of decomposition of hydrogen peroxide in sulfuric acid, the method comprising:
decomposing hydrogen peroxide in sulfuric acid by a bed of activated carbon that belongs to a filter, while controlling a level of the sulfuric acid within the filter not to exceed a height threshold.

2. The method according to claim 1 wherein the height threshold is set to increase a release, from the bed, of oxygen that is generated during the decomposing .

3. The method according to claim 1 wherein the height threshold does not exceed fifty millimeters above a top of the bed.

4. The method according to claim 1 wherein the height threshold is between fifty to hundred millimeters below a top of the bed.

5. The method according to claim 1 wherein the height threshold is below a region of maximal heating of the bed.

6. The method according to claim 1, comprising controlling the level of the sulfuric acid within the filter to exceed the bed during idle periods between one filtering period to another.

7. The method according to claim 1, wherein the controlling of the level of the sulfuric acid within the filter comprises controlling the level of the sulfuric acid by at least one of an S-bend pipe and a valve.

8. The method according to claim 7, comprising preventing a formation of a negative pressure at an outlet of the S-bend pipe.

9. The method according to claim 1 comprising maintaining an atmospheric pressure within the filter while decomposing the hydrogen peroxide in the sulfuric acid.

10. The method according to claim 1 comprising monitoring a temperature of at least one part of the bed.

11. The method according to claim 10 comprising stopping a feed of the sulfuric acid to the filter when the temperature exceeds a temperature threshold.

12. The method according to claim 1, comprising outputting processed sulfuric acid from the filter to a storage tank or to another filter that is followed by the storage tank.

13. The method according to claim 1, wherein the decomposing is followed by mechanically filtering of the sulfuric acid that was outputted from the filter.

14. A system for decomposition of hydrogen peroxide in sulfuric acid, the system comprising:
a filter that comprises a bed of activated carbon, wherein the bed is configured to the decompose hydrogen peroxide in the sulfuric acid, while controlling a level of the sulfuric acid within the filter not to exceed a height threshold.

15. The system according to claim 14, wherein the height threshold is set to increase a release, from the bed, of oxygen that is generated during the decomposing .
